# FASCICULE DE BREVET EUROPEEN

(11) **EP 0 857 608 B1**
(45) Date de publication et mention de la délivrance du brevet: **16.01.2002**
(21) Numéro de dépôt: 98400235.2
(22) Date de dépôt: 04.02.1998
(51) Int. Cl.: B60Q 1/068

(54) **Projecteur pour véhicule automobile comportant des moyens de réglage de faisceau perfectionnés**
Kraftfahrzeugscheinwerfer mit Einstellung der Orientierung des Lichtbündels
Vehicle headlamp with light beam inclination control

(30) Priorité: 05.02.1997 FR 9701283
(43) Date de publication de la demande: 12.08.1998
(73) Titulaire: VALEO VISION, 93000 Bobigny (FR)
(72) Inventeur: Di Stefano, Enrico, 94000 Creteil (FR); Mogliotti, Gianpiero, 94000 Creteil (FR)
(74) Mandataire: Martin, Jean-Jacques

(56) Documents cités:
- EP-A- 0 649 774
- DE-A- 19 619 586

## Description

La présente invention concerne d'une façon générale les projecteurs de véhicules automobiles, et plus particulièrement un perfectionnement d'un projecteur comportant un dispositif de réglage de l'orientation du faisceau lumineux, notamment en azimut.

Un projecteur comprend classiquement un boîtier fermé à l'avant par une glace et abritant un miroir au fond duquel est montée une lampe.

On sait équiper un tel projecteur de moyens de réglage de l'orientation du faisceau, en particulier de son orientation en azimut, qui permettent notamment de corriger les écarts obtenus au montage et résultant des jeux et tolérances de fabrication.

Dans la technique antérieure, le réflecteur est mobile en rotation autour d'un axe vertical, et relié en un point distinct de cet axe à l'extrémité d'une tige filetée vissée dans le boîtier du projecteur, et dirigée sensiblement selon la direction d'émission. Le déplacement axial de la tige filetée induit ainsi le pivotement du réflecteur. Le réglage de l'orientation du réflecteur s'effectue par rotation de la tige filetée qui est reliée par l'intermédiaire d'un ensemble d'entraînement à un organe de manoeuvre, par exemple l'arbre de sortie d'un moteur électrique ou une tête rotative actionnée à la main ou à l'aide d'un tournevis.

Cependant, de tels dispositifs de réglage de l'orientation présentent un inconvénient lorsque la commande, électrique ou manuelle, cherche à atteindre une orientation du réflecteur qui soit au-delà des limites permises.

Si aucune précaution n'est prise, et en particulier dans le cas d'un réglage manuel, l'utilisateur peut, en forçant, déformer ou rompre le réflecteur arrivé en fin de course en appui contre le boîtier, ou déformer ou rompre un élément de l'ensemble d'entraînement de la tige filetée, comme par exemple des dents d'engrenages, ou même endommager le filetage de la tige. Dans la pratique, un couple supérieur à environ 1 N.m correspond à un tel forçage, le couple de réglage étant voisin de 0,4 N.m.

Les constructeurs sont donc amenés à prévoir des moyens de réglage aptes à résister à un effort excessif exercé par l'utilisateur, et à réaliser des dispositifs plus coûteux parce que plus lourds et plus robustes. Dans le cas d'un actionnement électrique, le constructeur doit munir le dispositif de moyens électriques de sécurité aptes à couper l'alimentation du moteur lorsque les limites permises pour l'orientation du réflecteur sont atteintes pour d'une part protéger mécaniquement l'ensemble d'entraînement, et d'autre part protéger le moteur contre les échauffements. Là encore, de tels moyens électriques rendent les dispositifs de réglage plus lourds et plus coûteux.

Pour tenter de résoudre ce problème, on a proposé dans le document DE 196 19 586 (préambule de la revendication 1) un dispositif d'entraînement d'une partie mobile d'un projecteur, comprenant une tige filetée entraînée en rotation par un manchon l'entourant partiellement.

Le manchon forme des arêtes longitudinales en son sein et la tige filetée est munie de rainures longitudinales aptes à recevoir les arêtes de sorte que le manchon et la tige soient maintenus solidaires en rotation.

Les arêtes sont prévues pour s'extraire des rainures de la tige par flexibilité du manchon lorsqu'un couple excessif est transmis à la tige filetée. Les arêtes du manchon glissent alors sur la périphérie de la tige.

Ce dispositif présente toutefois un inconvénient majeur. Lors du glissement du manchon autour de la tige, les géométries du manchon et de la partie de la tige reçue dans le manchon induisent une déformation du manchon qui peut aller au delà de sa limite d'élasticité, et plus généralement induisent un forçage des différentes pièces élastiques du dispositif.

Par ailleurs, de telles géométries du manchon et de la tige filetée ne permettent d'adapter que difficilement la valeur d'un couple-limite pour laquelle le glissement se produit.

Le but principal de la présente invention est de proposer un projecteur pour véhicule automobile muni d'un dispositif de réglage de l'orientation d'un réflecteur comportant un élément rotatif et un dispositif adapté à limiter le couple transmis à cet élément rotatif, par glissement d'un autre élément de transmission autour de cet élément rotatif, dans lequel les différentes pièces déformées lors du glissement présentent une souplesse améliorée, et permettant une définition aisée et précise de la valeur du couple pour laquelle un tel glissement se produit.

Ce but est atteint selon l'invention grâce à un projecteur pour véhicule automobile, du type comportant une lampe, une glace, un boîtier, un réflecteur apte à pivoter autour d'un axe, un dispositif de réglage de l'orientation du réflecteur comprenant un organe de manoeuvre, un ensemble de transformation de mouvement convertissant une rotation en une translation définissant l'orientation du réflecteur, un ensemble d'entraînement entre l'organe de manoeuvre et l'ensemble de transformation de mouvement, l'ensemble d'entraînement comprenant deux éléments de transmission rotatifs coaxiaux adjacents, l'un de ces éléments de transmission portant un élément rigide de section transversale à périphérie extérieure non circulaire, l'autre élément de transmission portant au moins un élément flexible creux et fermé sur lui-même, en appui élastique radial autour de ladite périphérie non circulaire, de sorte qu'un couple excessif exercé entre les deux éléments rotatifs coaxiaux induit une déformation élastique de l'élément flexible permettant un glissement de l'élément rigide sur l'élément flexible, l'élément rigide comportant deux faces planes opposées et l'élément flexible étant un anneau élastique entourant l'élément rigide, et comportant deux méplats intérieurs opposés aptes à coopérer avec les dites faces planes de l'élément rigide.

Des aspects préférés, mais non limitatifs, du projecteur selon l'invention sont les suivants :
- l'ensemble de transformation de mouvement comprend une tige filetée vissée dans un élément fixe par rapport au boîtier ;
- le glissement peut couvrir des étendues angulaires supérieures à 360° ;
- les deux méplats intérieurs présentent une largeur sensiblement égale à la largeur des dites faces de l'élément rigide et, en position de repos de l'anneau élastique, les deux méplats intérieurs présentent un écartement sensiblement égal à la distance séparant les dites faces planes de l'élément rigide ;
- l'anneau élastique a un rayon intérieur supérieur ou égal à la distance entre les arêtes de ladite section transversale de l'élément rigide et l'axe de rotation de l'élément rigide ;
- l'élément flexible est relié audit élément de transmission rotatif qui le porte par deux pattes élastiques d'un seul tenant avec ledit élément flexible ;
- lesdites pattes élastiques sont reliées à l'anneau flexible au niveau des deux méplats ;
- l'élément flexible est relié à l'élément de transmission rotatif qui le porte par des pattes élastiques supplémentaires de rigidification en torsion ;
- ledit autre élément de transmission porte plusieurs éléments flexibles disposés le long de son axe de rotation avec un espacement régulier et la longueur axiale de l'élément rigide est supérieure à cet espacement, de sorte qu'en toute position de réglage, l'élément rigide coopère avec au moins l'un des éléments flexibles ;
- le projecteur comporte des premiers moyens de butée de la tige contre le boîtier dans la position de la tige la plus en avant ;
- l'élément rigide est porté par la tige et possède des dimensions extérieures au moins localement supérieures au diamètre de la tige, de sorte que l'élément rigide constitue un élément de butée contre le boîtier dans la position la plus en avant de la tige ;
- Le projecteur comprend des seconds moyens de butée de la tige contre le boîtier dans la position la plus en arrière de la tige ;
- les seconds moyens de butée comprennent des ailes formées sur la tige, en saillie dans leur position de repos et pouvant être effacées vers l'intérieur par déformation élastique lors de la mise en place de la tige dans ledit élément fixe par rapport au boîtier.
- l'élément rigide est porté par la tige et possède, transversalement à son axe de rotation, des dimensions supérieures au diamètre d'une partie filetée de la tige, de sorte que la partie filetée est autorisée à pénétrer dans l'anneau élastique.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
- la figure 1 est une vue en coupe verticale, selon un plan parallèle à l'axe principal du véhicule, d'un projecteur conforme à l'état de la technique antérieure ;
- la figure 2 est une vue en coupe, selon Le même plan, d'un projecteur conforme à la présente invention ;
- la figure 3 est une vue en coupe d'un élément portant un élément flexible conforme à la présente invention, selon un plan passant par l'axe de rotation de cet élément et passant par des pattes élastiques selon l'invention ;
- la figure 4 est une vue de côté de ce même élément, à partir de l'extrémité portant l'élément flexible ;
- la figure 5 est une vue en coupe selon le plan de coupe axial perpendiculaire à celui de la figure 3, du même élément ;
- la figure 6 est une vue en coupe du même élément que celui de la figure 3 et selon un même plan de coupe, dans lequel est engagée l'extrémité arrière d'une tige filetée selon l'invention ;
- la figure 7 est une vue en coupe du même ensemble selon le plan de coupe VII-VII indiqué sur la figure 6 ;
- la figure 8 est une vue en coupe d'un élément portant plusieurs éléments flexibles, conforme à la présente invention, selon un plan passant par l'axe de rotation de l'élément et passant par des pattes élastiques selon l'invention ;
- la figure 9 est une même vue en coupe du même élément dans lequel est engagée l'extrémité arrière de la tige filetée ;
- la figure 10 est une vue en coupe du même élément selon un plan de coupe X-X indiqué sur la figure 9, dans lequel est engagé un élément rigide selon l'invention ;
- la figure 11 est une vue en coupe de l'élément de la figure 8, selon un plan de coupe XI-XI indiqué sur la figure 8 ; et
- la figure 12 est une vue en coupe d'une tige filetée, selon un plan axial passant par des ailes souples selon l'invention.

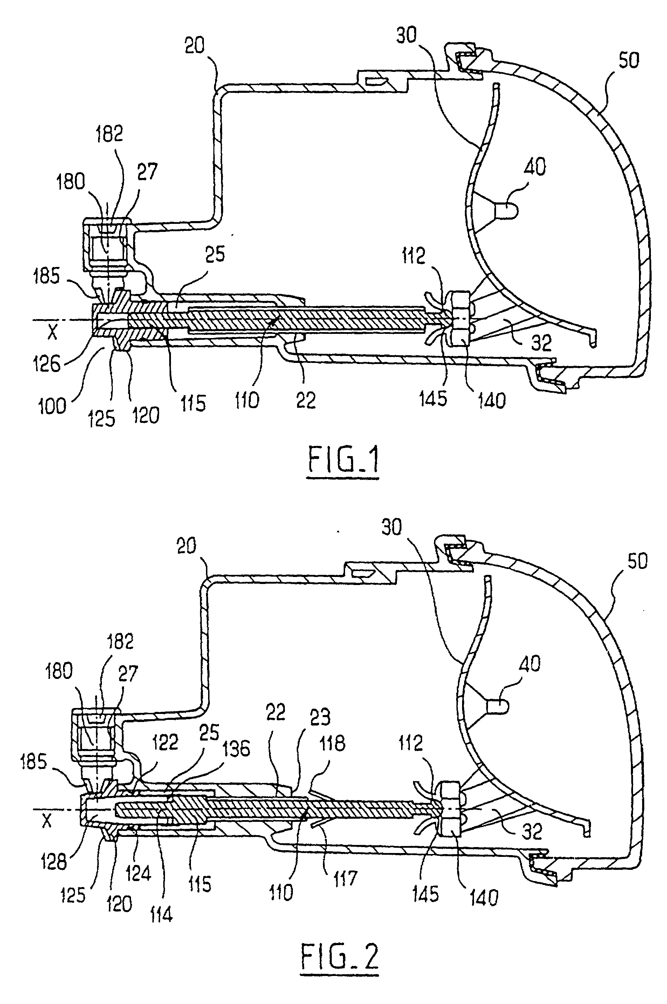

En référence tout d'abord à la figure 1, on a représenté un projecteur comportant un dispositif de réglage de l'orientation du faisceau conforme à l'état de la technique antérieure. Il comprend un boîtier 20, un réflecteur 30 mobile autour d'un axe vertical, une lampe 40, une glace 50, et un dispositif de réglage de l'orientation du réflecteur 100.

Le dispositif de réglage 100 se divise en trois sous-ensembles : une tige filetée 110, un ensemble tête d'entraînement 120/ pignon de manoeuvre 180, et un ensemble de liaison 140 de la tige filetée 110 avec le réflecteur 30.

La tige filetée 110 est engagée dans un passage cylindrique 22 du boîtier 20, d'axe X sensiblement parallèle à la direction de roulement du véhicule, et muni d'un pas-de-vis complémentaire du filetage de la tige 110.

La tige 110 est prolongée, à son extrémité adjacente au réflecteur 30, d'une tête sphérique 112. Celle-ci est engagée dans un évidement complémentaire 145 formé dans une capsule 140 reliée au réflecteur 30 par une partie arrière 32 venue de moulage avec lui. De cette façon, la liaison entre la capsule 140 et la tige 110 est de type rotule, permettant d'abord une rotation relative de la capsule 140 et de la tige 110 par rapport à l'axe principal X de la tige 110, et permettant également l'adaptation de la capsule 140 au mouvement de rotation du réflecteur 30 autour de son axe lors du réglage de l'orientation du faisceau.

La tige 110 est prolongée à son extrémité dirigée vers l'arrière du projecteur par un doigt 115 de même axe X et de section transversale carrée, engagé dans un orifice borgne 126 formé dans la tête d'entraînement 120 et de même axe et de même section transversale que le doigt 115. Ainsi, la tige est solidaire de la tête d'entraînement 120 en rotation autour de leur axe commun X, et libre par rapport à elle en translation selon ce même axe X. La tête d'entraînement 120 est formée d'un élément sensiblement cylindrique d'axe confondu avec l'axe X de la tige filetée 110, et engagée dans un passage cylindrique complémentaire 25 appartenant au boîtier 20, lui aussi d'axe X. La tête d'entraînement 120 est prolongée par une couronne conique dentée 125 adjacente à un pignon de manoeuvre 180. Le pignon 180 est cylindrique et d'axe perpendiculaire à celui de la tête d'entraînement 120, et est lui-même engagé dans un passage cylindrique 27 appartenant au boîtier 20. Il est prolongé par une roue dentée 185 formant engrenage avec la couronne conique dentée 125.

De cette façon, lorsque le pignon de manoeuvre 180 est entraîné en rotation à l'aide de son empreinte à l'extérieur 182, il entraîne lui-même en rotation la tête d'entraînement 120 et la tige filetée 110.

Le pignon 180 peut être entraîné à l'aide d'un tournevis, ou en variante la tête 120 peut être entraînée par un moteur électrique.

On a représenté, sur la figure 2, un projecteur conforme à la présente invention.

Sa structure est semblable à celle du projecteur décrit précédemment, et les éléments identiques ou similaires, désignés par les mêmes signes de référence, ne seront pas décrits à nouveau.

Une tête d'entraînement 120 est engagée dans un passage cylindrique 25 appartenant au boîtier 20. Dans cette configuration, la tête d'entraînement 120 est apte à pivoter autour de l'axe de symétrie du passage 25 confondu avec l'axe X de la tige filetée 110.

La tige filetée 110 comporte une partie filetée centrale. A l'arrière de cette partie filetée, elle comporte une partie rigide élargie 115, apte à être menée par un élément flexible 136 porté par la tête d'entraînement. Un doigt cylindrique 114 prolonge la tige 110 vers l'arrière du projecteur, et à l'intérieur d'un orifice borgne central 128 formé dans la tête d'entraînement 120.

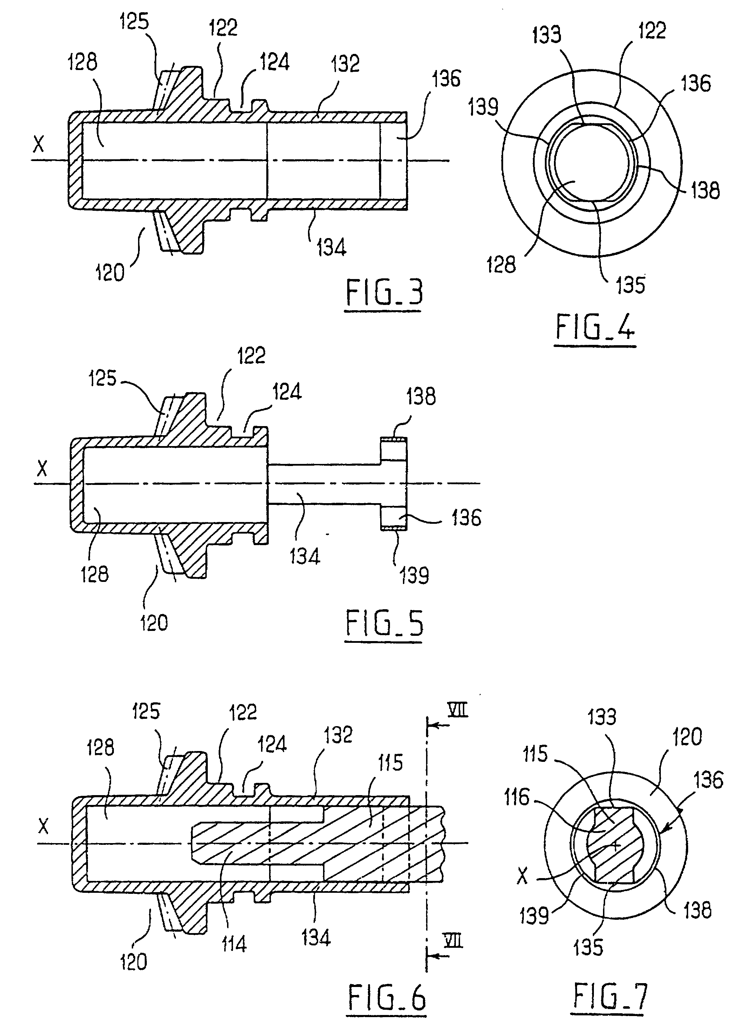

On a représenté, sur les figures 6 et 7, la tête d'entraînement 120 et la partie menée 115 prolongée par le doigt 114, dans une position correspondant à une position de réglage du réflecteur 30.

Deux pattes souples 132 et 134 sont fixées à l'ouverture de l'orifice borgne central 128 qui est adjacente à la tige filetée 110. Ces pattes souples sont des lames élastiques disposées symétriquement par rapport à l'axe principal X de la tête d'entraînement 120, le sens de la largeur des lames étant dans la direction orthoradiale. Les deux lames 132 et 134 s'étendent parallèlement à l'axe principal X à partir de l'ouverture de l'orifice borgne 128 et jusqu'à un anneau 136 constituée par une lame élastique en boucle dont le plan moyen est perpendiculaire à l'axe principal X de la tête d'entraînement 120, le sens de la largeur de cet anneau étant parallèle à l'axe principal X.

Plus précisément, l'anneau 136 forme, dans un plan perpendiculaire à l'axe X, un cercle comportant deux méplats intérieurs 133 et 135, disposés de manière diamétralement opposée par rapport au centre de ce cercle, les méplats 133 et 135 étant orientés orthoradialement. La périphérie intérieure de l'anneau 136 est, en-dehors des méplats, constitué par des arcs de cercle 138 et 139 centrés sur l'axe de rotation X de la tête d'entraînement 120, et de rayon sensiblement égal à la distance séparant les arêtes de la partie menée 115 à l'axe de rotation X de la tige 110.

Comme on le voit sur les figures 3 et 4, les pattes souples 132 et 134 sont reliées à l'anneau 136 au niveau des méplats 133 et 135 de celui-ci.

Sur les figures 6 et 7, on a représenté un anneau 136 dans lequel est engagée la partie menée 115 de la tige filetée 110.

Comme on peut le voir sur la figure 7, l'élément mené 115 comporte deux côtés opposés aptes à coopérer avec les méplats intérieurs 133 et 135 de l'anneau 136. Dans ce mode de réalisation préférentiel, la longueur des petits côtés de l'élément mené 115 est sensiblement égale à la longueur des méplats 133 et 135. D'autre part, l'écartement entre les deux méplats 133 et 135 est, en situation de repos de l'élément flexible 136, sensiblement égal à la distance entre les deux petits côtés de la partie menée 115. Dans cette configuration, l'application d'un couple entre la tête d'entraînement 120 et la tige 110 va tendre à écarter les méplats 133 et 135 de l'axe X de la tête d'entraînement.

La rigidité de l'anneau 136 et des pattes souples 132 et 134 est choisie suffisamment grande pour que la tête d'entraînement 120 entraîne dans sa rotation autour de l'axe X, la partie menée 115 et la tige filetée 110, si cette dernière n'est pas gênée dans sa rotation par d'autres forces que les forces de frottement.

Dans le cas où la tige filetée 110 est bloquée en translation, et par conséquent en rotation, dans le sens où la tête d'entraînement 120 est pivotée, et si un couple excessif est exercé sur la tête d'entraînement 120, les petits côtés de la partie menée glissent contre les méplats 133 et 135 en les écartant. L'écartement des méplats 133 et 135 est permis par la flexibilité radiale des pattes élastiques 132 et 134. Les arêtes de la partie menée 115 glissent ensuite contre les arcs de cercle 138 et 139 de l'anneau 136. Le rayon intérieur des arcs de cercle 138 et 139 étant égal à la distance séparant les arêtes de l'axe de rotation X de la partie menée 115, l'anneau 136 retrouve sa forme de repos pendant le glissement des arêtes sur les arcs de cercle 138 et 139. Si la rotation relative se poursuit, la partie menée peut reprendre ou repasser par une position similaire à la position de départ, où les petits côtés coopèrent avec les méplats 133 et 135.

Par ailleurs, on voit sur la figure 6 que l'orifice borgne central 128 de la tête d'entraînement 120 a une taille suffisante pour ne pas faire obstacle à la rotation du doigt 114 et donc de la tige 110.

Selon une variante de l'invention, non représentée, on peut prévoir l'élément rigide solidaire de la tête d'entraînement 120 et l'anneau déformable 136 solidaire de la tige filetée 110.

La partie menée 115 présentant, conformément à l'invention, une largeur supérieure au diamètre de la partie filetée de la tige 110, le dispositif permet, dans une position reculée de la tige 110, que sa partie filetée soit partiellement engagée à l'intérieur de l'anneau 136. Dans une telle position, la partie filetée n'est pas en contact avec l'anneau 136.

Une telle possibilité, dans une position extrême de la tige filetée, que sa partie filetée s'étende à l'intérieur de l'anneau, permet d'adopter une longueur élevée de la partie filetée, et donc une course plus importante de la tige filetée le long de son axe principal, c'est à dire une amplitude de réglage plus importante. Une telle disposition permet encore d'adopter une longueur totale de tige réduite, pour une course de réglage choisie.

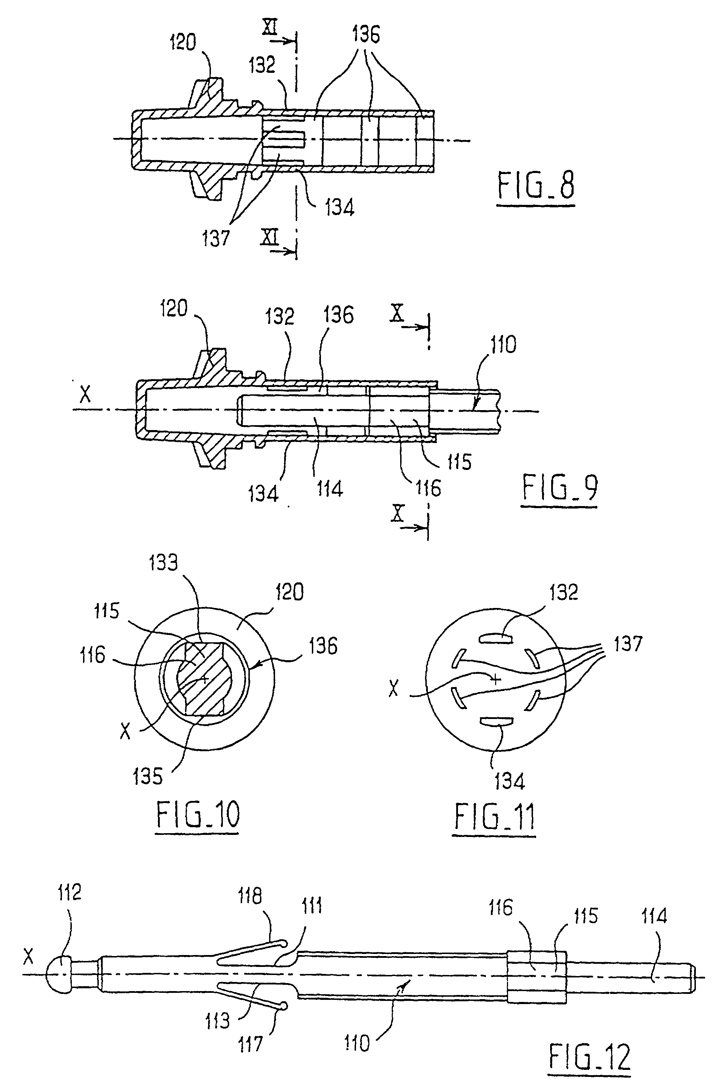

Selon une variante de l'invention représentée sur les figures 8 à 11, la tête d'entraînement 120 peut porter plusieurs éléments flexibles 136, reliés d'une part entre eux et d'autre part à la tête d'entraînement 120 par deux pattes élastiques 132 et 134 disposées sensiblement axialement. Dans ce mode de réalisation préférentiel, trois anneaux 136 identiques à celui des figures 3 à 7 sont disposés dans trois plans perpendiculaires à l'axe X, ces trois plans ayant entre eux un espacement constant. Comme représenté sur la figure 9, la partie menée 115 de la tige filetée a une longueur axiale supérieure à l'espacement entre les anneaux 136, de sorte que pour toute position relative de la tige 110 et de la tête d'entraînement 120, la partie menée 115 est engagée dans au moins un anneau 136. Les dimensions intérieures des anneaux 136 étant complémentaires des dimensions de la partie menée 115, cette dernière sort et pénètre dans chacun des anneaux 136 sans que ses arêtes ne butent contre les anneaux 136.

On voit sur les figures 8 et 11 que l'élément flexible 136 adjacent à la tête d'entraînement peut être relié à cette dernière par des pattes élastiques 137 supplémentaires qui améliorent la résistance de l'ensemble à la torsion. On a ainsi disposé quatre pattes élastiques supplémentaires 137 parallèlement aux pattes 132 et 134 reliées aux méplats intérieurs 133 et 135. Ces pattes 137 de rigidification en torsion ont une géométrie proche de celle des pattes 132 et 134. Elles ont notamment une longueur orthoradiale apte à apporter une rigidité suffisante en torsion, et une épaisseur radiale suffisamment faible pour autoriser, par flexion, les déformations radiales de l'anneau 136. Les pattes 137 sont réparties uniformément autour de l'axe X.

Dans le mode de réalisation préférentiel des figures 2 à 7, la partie menée 115 a des dimensions extérieures supérieures au diamètre de la partie filetée de la tige 110. La partie menée 115 est libre de circuler dans le passage cylindrique 25 qui s'étend de l'ouverture recevant la tête d'entraînement 120 jusqu'au passage cylindrique 22, et dont le diamètre intérieur est, sur cette étendue, supérieure aux dimensions extérieures de la partie menée 115.

Le passage 25 se termine au niveau du passage 22 par un brusque rétrécissement, servant de butée pour la partie menée 115 quand la tige filetée est dans une position avancée vers la glace 50 correspondant à une orientation extrême du réflecteur vers le haut. Dans cette position de butée, la tige filetée 110 est bien sûr bloquée en rotation dans le sens tendant à la faire avancer vers la glace 50. La longueur axiale de la partie menée est assez grande pour que lorsque celle-ci est en butée contre le passage cylindrique 22, la partie menée 115 coopère également avec l'élément flexible 136 à son extrémité opposée.

La tige filetée 110 porte également deux ailes élastiques 117 et 118 ouvertes vers le passage 22. Dans un mode de réalisation préférentiel de l'invention, la tige filetée 110 est réalisée en plastique moulé. Les pattes élastiques 117 et 118 sont alors moulées en même temps que le reste de la tige 110.

Les ailes 117 et 118 entrent en butée élastique contre une face verticale 23 formée au niveau de l'ouverture du passage 22 la plus proche du réflecteur 30, quand la tige filetée 110 est dans sa position la plus reculée, correspondant à l'orientation extrême vers le bas du réflecteur 30.

Comme on le voit sur la figure 12, les ailes élastiques 117 et 118 surplombent des évidements longitudinaux 111 et 113 de sorte que les ailes 117 et 118 peuvent être repliées élastiquement contre la tige 110, s'effaçant ainsi dans les évidements 111 et 113 pour permettre la mise en place par vissage de la tige filetée 110 dans le passage 22.

Le fonctionnement de l'ensemble de réglage représenté sur les figures 2 à 7 est le suivant :

L'utilisateur actionne le pignon d'entraînement 180 en rotation à l'aide d'un tournevis dont l'extrémité est engagée dans l'empreinte 182. Le mouvement de rotation du pignon 180 entraîne en rotation la tête d'entraînement 120 par l'intermédiaire des dentures 135 et 125. Selon la position initiale de la tige filetée 110, le doigt 114 peut être ou non engagé dans l'orifice borgne central 128. Dans chacun des deux cas, aucun contact n'existe entre l'orifice borgne central 128 et le doigt 114.

Si la tige filetée 110 n'est pas en butée, l'élément flexible 136 lié à la tête d'entraînement 120 entraîne la tige filetée 110 en rotation. Si la partie menée 115 ou les ailes 117 et 118 arrivent en butée contre les extrémités du passage 22, un effort excessif de l'utilisateur sur le pignon d'entraînement 180 entraîne une rotation relative de la tête d'entraînement 120 par rapport à la tige 110, permise par la déformation de l'anneau flexible 136, et glissement de ce dernier sur la partie menée 115, protégeant d'un forçage mécanique l'ensemble des pièces disposées en aval de l'élément flexible 136 sur la chaîne d'entraînement, c'est-à-dire la partie menée 115, la partie filetée centrale, le passage 22, la capsule 140 et le réflecteur 30.

L'utilisateur n'a donc pas la possibilité de forcer sur le pignon 180 en rotation, puisque celui-ci, exposé à un couple résistant toujours inférieur à celui qui provoque le glissement de l'élément flexible 136 sur l'élément rigide 115, n'est jamais bloqué. Dans un mode de réalisation préférentiel de l'invention, on cherchera à ce que le glissement intervienne pour un couple avoisinant 0,7 N.m..

Une rotation du pignon d'entraînement 180 dans le sens opposé entraîne à nouveau la rotation de la tige filetée 110 dans le sens opposé qui, elle, n'est pas empêchée par la mise en butée de la tige filetée 110.

Bien sûr, l'invention n'est pas limitée aux exemples de réalisation qui viennent d'être décrits, mais s'étend à toute variante conforme à son esprit.

En particulier, on peut prévoir une tige mobile en translation et bloquée en rotation, actionnée par un écrou rotatif mobile en rotation et bloqué en translation.

Plus généralement, on pourra prévoir tout moyen de transformation de mouvement convertissant une rotation en une translation.

## Revendications

1. Projecteur pour véhicule automobile, du type comportant une lampe (40), une glace (50), un boîtier (20), un réflecteur (30) apte à pivoter autour d'un axe, un dispositif de réglage de l'orientation du réflecteur (30) comprenant un organe de manoeuvre (180), un ensemble de transformation de mouvement convertissant une rotation en une translation définissant l'orientation du réflecteur (30), un ensemble d'entraînement entre l'organe de manoeuvre (180) et l'ensemble de transformation de mouvement, l'ensemble d'entraînement comprenant deux éléments de transmission rotatifs coaxiaux adjacents (110, 120), l'un de ces éléments de transmission portant un élément rigide (115) de section transversale à périphérie extérieure non circulaire, l'autre élément de transmission portant au moins un élément flexible (136) creux et fermé sur lui-même, en appui élastique radial autour de ladite périphérie non circulaire (115), de sorte qu'un couple excessif exercé entre les deux éléments rotatifs coaxiaux (110, 120) induit une déformation élastique de l'élément flexible (136) permettant un glissement de l'élément rigide (115) sur l'élément flexible (136), **caractérisé en ce que** l'élément rigide (115) comporte deux faces planes opposées et **en ce que** l'élément flexible est un anneau élastique (136) entourant l'élément rigide (115), et comportant deux méplats intérieurs opposés (133, 135) aptes à coopérer avec les dites faces planes de l'élément rigide (115).

2. Projecteur selon la revendication 1, **caractérisé en ce que** l'ensemble de transformation de mouvement comprend une tige filetée (110) vissée dans un élément (22) fixe par rapport au boîtier (20).

3. Projecteur selon l'une des revendications 1 et 2, **caractérisé en ce que** le glissement peut couvrir des étendues angulaires supérieures à 360°.

4. Projecteur selon l'une des revendications 1 à 3, **caractérisé en ce que** les deux méplats intérieurs (133, 135) présentent une largeur sensiblement égale à la largeur des dites faces de l'élément rigide (115) et **en ce que**, en position de repos de l'anneau élastique (136), les deux méplats intérieurs (133, 135) présentent un écartement sensiblement égal à la distance séparant les dites faces planes de l'élément rigide (115).

5. Projecteur selon l'une des revendications 1 à 4, **caractérisé en ce que** l'anneau élastique (136) a un rayon intérieur supérieur ou égal à la distance entre les arêtes de ladite section transversale de l'élément rigide (115) et l'axe de rotation (X) de l'élément rigide (115).

6. Projecteur selon l'une quelconque des revendications 1 à 5, **caractérisé en ce que** l'élément flexible (136) est relié audit élément de transmission rotatif qui le porte (120) par deux pattes élastiques (132, 134) d'un seul tenant avec ledit élément flexible (136).

7. Projecteur selon la revendication 6 et l'une des revendications 1 à 5 en combinaison, **caractérisé en ce que** lesdites pattes élastiques (132, 134) sont reliées à l'anneau flexible (136) au niveau des deux méplats (133, 135).

8. Projecteur selon la revendication 6 ou 7, **caractérisé en ce que** l'élément flexible (136) est relié à l'élément de transmission (120) rotatif qui le porte par des pattes élastiques (137) supplémentaires de rigidification en torsion.

9. Projecteur selon l'une quelconque des revendications 1 à 8, **caractérisé en ce que** ledit autre élément de transmission (120) porte plusieurs éléments flexibles (136) disposés le long de son axe de rotation (X) avec un espacement régulier et **en ce que** la longueur axiale de l'élément rigide (115) est supérieure à cet espacement, de sorte qu'en toute position de réglage, l'élément rigide (115) coopère avec au moins l'un des éléments flexibles (136).

10. Projecteur selon la revendication 2 en combinaison avec l'une quelconque des revendications 3 à 9, **caractérisé en ce qu'**il comporte des premiers moyens de butée (116, 22) de la tige (110) contre le boîtier (20) dans la position de la tige (110) la plus en avant.

11. Projecteur selon la revendication 10, **caractérisé en ce que** l'élément rigide (115) est porté par la tige (110) et possède des dimensions extérieures au moins localement supérieures au diamètre de la tige (110), de sorte que l'élément rigide (115) constitue un élément de butée contre le boîtier (20) dans la position la plus en avant de la tige (110).

12. Projecteur selon la revendication 2 en combinaison avec l'une quelconque des revendications 3 à 11, **caractérisé en ce qu'**il comprend des seconds moyens de butée (117, 118, 22) de la tige (110) contre le boîtier (20) dans la position la plus en arrière de la tige (110).

13. Projecteur selon la revendication 12, **caractérisé en ce que** les seconds moyens de butée comprennent des ailes (117, 118) formées sur la tige (110), en saillie dans leur position de repos et pouvant être effacées vers l'intérieur (110) par déformation élastique lors de la mise en place de la tige (110) dans ledit élément fixe (22) par rapport au boîtier (20).

14. Projecteur selon la revendication 2 en combinaison avec l'une quelconque des revendications 3 à 13, **caractérisé en ce que** l'élément rigide (115) est porté par la tige (110)et possède, transversalement à son axe de rotation (X), des dimensions supérieures au diamètre d'une partie filetée de la tige (110), de sorte que la partie filetée est autorisée à pénétrer dans l'anneau élastique (136).

## Claims

1. Headlight for a motor vehicle, of the type having a lamp (40), a glass (50), a housing (20), a reflector (30) able to pivot about an axis, a device for adjusting the orientation of the reflector (30) comprising a manoeuvring member (180), a movement conversion assembly converting a rotation into a translation defining the orientation of the reflector (30), and a drive assembly between the manoeuvring member (180) and the movement conversion assembly, the drive assembly comprising two adjacent coaxial rotary transmission elements (110, 120), one of these transmission elements carrying a rigid element (115) with a transverse section with a non-circular external periphery, the other transmission element carrying at least one hollow flexible element (136) closed on itself, in radial elastic abutment around the said non-circular periphery (115), so that an excessive torque exerted between the two coaxial rotary elements (110, 120) causes an elastic deformation of the flexible element (136) allowing a sliding of the rigid element (115) on the flexible element (136), **characterised in that** the rigid element (115) has two opposite flat faces and **in that** the flexible element is an elastic annulus (136) surrounding the rigid element (115), and having two opposite internal flats (133, 135) able to cooperate with the said flat faces of the rigid element (115).

2. Headlight according to Claim 1, **characterised in that** the movement conversion assembly comprises a threaded rod (110) screwed into an element (22) fixed with respect to the housing (20).

3. Headlight according to one of Claims 1 and 2, **characterised in that** the sliding can cover angular ranges greater than 360°.

4. Headlight according to one of Claims 1 to 3, **characterised in that** the two internal flats (133, 135) have a width substantially equal to the width of the said faces of the rigid element (115) and **in that**, in the position of rest of the elastic annulus (136), the two internal flats (133, 135) have a separation substantially equal to the distance separating the said flat faces of the rigid element (115).

5. Headlight according to one of Claims 1 to 4, **characterised in that** the elastic annulus (136) has an inside radius greater than or equal to the distance between the edges of the said transverse section of the rigid element (115) and the axis of rotation (X) of the rigid element (115).

6. Headlight according to any one of Claims 1 to 5, **characterised in that** the flexible element (136) is connected to the said rotary transmission element which carries it (120) by means of two elastic lugs (132, 134) in a single piece with the said flexible element (136).

7. Headlight according to Claim 6 and one of Claims 1 to 5 in combination, **characterised in that** the said elastic lugs (132, 134) are connected to the flexible annulus (136) at the two flats (133, 135).

8. Headlight according to Claim 6 or 7, **characterised in that** the flexible element (136) is connected to the rotary transmission element (120) which carries it by means of additional elastic lugs (137) for stiffening under torsion.

9. Headlight according to any one of Claims 1 to 8, **characterised in that** the said other transmission element (120) carries several flexible elements (136) disposed along its axis of rotation (X) with a regular spacing and **in that** the axial length of the rigid element (115) is greater than the spacing, so that, in any adjustment position, the rigid element (115) cooperates with at least one of the flexible elements (136).

10. Headlight according to Claim 2 in combination with any one of Claims 3 to 9, **characterised in that** it has first means (116, 22) of abutting the rod (110) against the housing (20) in the most forward position of the rod (110).

11. Headlight according to Claim 10, **characterised in that** the rigid element (115) is carried by the rod (110) and has external dimensions at least locally greater than the diameter of the rod (110), so that the rigid element (115) constitutes an abutment element against the housing (20) in the most forward position of the rod (110).

12. Headlight according to Claim 2 in combination with any one of Claims 3 to 11, **characterised in that** it comprises second means (117, 118, 22) of abutting the rod (110) against the housing (20) in the most rearward position of the rod (110).

13. Headlight according to Claim 12, **characterised in that** the second abutment means comprise wings (117, 118) formed on the rod (110), projecting in their position of rest and able to be retracted inwards (110) by elastic deformation when the rod (110) is fitted in the said fixed element (22) with respect to the housing (20).

14. Headlight according to Claim 2 in combination with any one of Claims 3 to 13, **characterised in that** the rigid element (115) is carried by the rod (110) and has, transversely to its axis of rotation (X), dimensions greater than the diameter of a threaded part of the rod (110), so that the threaded rod is allowed to enter the elastic annulus (136).

## Patentansprüche

1. Scheinwerfer für Kraftfahrzeuge, mit einer Lampe (40), einer Abdeckscheibe (50), einem Gehäuse (20), einem um eine Achse schwenkbaren Reflektor (30), einer Vorrichtung zur Einstellung der Ausrichtung des Reflektors (30) mit einem Bedienungselement (180), einer Einheit zur Bewegungsumwandlung, die eine Drehbewegung in eine die Ausrichtung des Reflektors (30) definierende Translationsbewegung umwandelt, einer Antriebseinheit zwischen dem Bedienungselement (180) und der Einheit zur Bewegungsumwandlung, wobei die Antriebseinheit zwei benachbarte koaxiale, rotierende Übertragungselemente (110, 120) umfaßt, wobei eines dieser Übertragungselemente ein starres Element (115) mit einem Querschnitt von nicht kreisförmigem Außenumfang trägt und das andere Übertragungselement wenigstens ein hohles und in sich geschlossenes, biegsames Element (136) trägt, das radial elastisch um diesen nicht kreisförmigen Umfang (115) aufliegt, so daß ein zwischen den beiden koaxialen rotierenden Elementen (110, 120) übermäßig ausgeübtes Drehmoment eine elastische Verformung des biegsamen Elements (136) hervorruft, wodurch das starre Element (115) auf dem biegsamen Element (136) gleiten kann,
**dadurch gekennzeichnet, daß** das starre Element (115) zwei entgegengesetzte ebene Seiten umfaßt und daß das biegsame Element ein elastischer Ring (136) ist, der das starre Element (115) umgibt und zwei gegenüberliegende innere Abflachungen (133, 135) aufweist, die mit diesen ebenen Seiten des starren Elements (115) zusammenzuwirken vermögen.

2. Scheinwerfer nach Anspruch 1,
**dadurch gekennzeichnet, daß** die Einheit zur Bewegungsumwandlung eine Gewindestange (110) umfaßt, die in ein bezüglich des Gehäuses (20) feststehendes Element (22) geschraubt ist.

3. Scheinwerfer nach einem der Ansprüche 1 oder 2,
**dadurch gekennzeichnet, daß** die Gleitbewegung Winkelausdehnungen von über 360° abdecken kann.

4. Scheinwerfer nach einem der Ansprüche 1 bis 3,
**dadurch gekennzeichnet, daß** die beiden inneren Abflachungen (133, 135) im wesentlichen genauso breit sind wie die Seiten des starren Elements (115), und daß die beiden inneren Abflachungen (133, 135) in Ruhestellung des elastischen Rings (136) einen Abstand voneinander aufweisen, der im wesentlichen dem Abstand entspricht, der die ebenen Seiten des starren Elements (115) trennt.

5. Scheinwerfer nach einem der Ansprüche 1 bis 4,
**dadurch gekennzeichnet, daß** der elastische Ring (136) einen inneren Radius hat, der größer oder gleich dem Abstand ist, der zwischen den Kanten des Querschnitts des starren Elements (115) und der Drehachse (X) des starren Elements (115) liegt.

6. Scheinwerfer nach einem der Ansprüche 1 bis 5,
**dadurch gekennzeichnet, daß** das biegsame Element (136) mit dem es tragenden rotierenden Übertragungselement (120) durch zwei elastische Klammern (132, 134) verbunden ist, die einstückig mit dem biegsamen Element (136) gearbeitet sind.

7. Scheinwerfer nach Anspruch 6 in Verbindung mit einem der Ansprüche 1 bis 5,
**dadurch gekennzeichnet, daß** die elastischen Klammern (132, 134) mit dem biegsamen Ring (136) in Höhe der zwei Abflachungen (133, 135) verbunden sind.

8. Scheinwerfer nach Anspruch 6 oder 7,
**dadurch gekennzeichnet, daß** das biegsame Element (136) mit dem es tragenden rotierenden Übertragungselement (120) durch zusätzliche elastische Klammern (137) zur Verdrehungsversteifung verbunden ist.

9. Scheinwerfer nach einem der Ansprüche 1 bis 8,
**dadurch gekennzeichnet, daß** das andere Übertragungselement (120) mehrere biegsame Elemente (136) trägt, die entlang seiner Drehachse (X) gleichmäßig beabstandet angeordnet sind, und daß die axiale Länge des starren Elements (115) größer ist als dieser Abstand, so daß das starre Element (115) in jeder Einstellposition mit wenigstens einem der biegsamen Elemente (136) zusammenwirkt.

10. Scheinwerfer nach Anspruch 2 in Verbindung mit einem der Ansprüche 3 bis 9,
**dadurch gekennzeichnet, daß** er erste Mittel (116, 22) zum Anschlagen der Stange (110) gegen das Gehäuse (20) in der vordersten Stellung der Stange (110) umfaßt.

11. Scheinwerfer nach Anspruch 10,
**dadurch gekennzeichnet, daß** das starre Element (115) von der Stange (110) getragen wird und Außenmaße aufweist, die wenigstens stellenweise größer sind als der Durchmesser der Stange (110), so daß das starre Element (115) ein Element zum Anschlagen gegen das Gehäuse (20) in der vordersten Stellung der Stange (110) bildet.

12. Scheinwerfer nach Anspruch 2 in Verbindung mit einem der Ansprüche 3 bis 11,
**dadurch gekennzeichnet, daß** er zweite Mittel zum Anschlagen (117, 118, 22) der Stange (110) gegen das Gehäuse (20) in der hintersten Stellung der Stange (110) aufweist.

13. Scheinwerfer nach Anspruch 12,
**dadurch gekennzeichnet, daß** die zweiten Anschlagmittel Flügel (117, 118) umfassen, die an der Stange (110) angeformt sind und in Ruhestellung vorstehen und zum Innenraum (110) durch elastische Verformung beim Einsetzen der Stange (110) in das bezüglich des Gehäuses (20) feststehende Element (22) weggeklappt werden können.

14. Scheinwerfer nach Anspruch 2 in Verbindung mit einem der Ansprüche 3 bis 13,
**dadurch gekennzeichnet, daß** das starre Element (115) von der Stange (110) getragen wird und quer zu seiner Drehachse (X) Abmessungen aufweist, die größer sind als der Durchmesser eines Gewindeteils der Stange (110), so daß der Gewindeteil in den elastischen Ring (136) einzudringen vermag.
